# EUROPÄISCHE PATENTSCHRIFT

(11) **EP 3 446 994 B1**
(45) Veröffentlichungstag und Bekanntmachung des Hinweises auf die Patenterteilung: **01.07.2020**
(21) Anmeldenummer: 18176239.4
(22) Anmeldetag: 06.06.2018
(51) Int. Cl.: B65D 1/28

(54) **TIEFGEZOGENER BEHÄLTER UND VERFAHREN ZUR HERSTELLUNG**
DEEP DRAWN CONTAINER AND METHOD TO MANUFACTURE
RÉCIPIENT EMBOUTI ET PROCÉDÉ DE FABRICATION

(30) Priorität: 23.08.2017 AT 507012017
(43) Veröffentlichungstag der Anmeldung: 27.02.2019
(73) Patentinhaber: Constantia Aloform GmbH, 58791 Werdohl (DE)
(72) Erfinder: Frekot, Alfred, 58840 Plettenberg (DE); Rippin, Ralf, 58540 Meinerzhagen (DE)
(74) Vertreter: Patentanwälte Barger, Piso & Partner

(56) Entgegenhaltungen:
- EP-A2- 0 106 362
- DE-A1-102005 036 269
- DE-A1-102007 018 778

## Beschreibung

Die Erfindung betrifft tiefgezogene Behälter aus zumindest einer Schicht Aluminium und zumindest einer Schicht Siegelmaterial, mit einem Boden und seitlichen Wänden, die am umlaufenden oberen Rand in einer Siegelebene eine Siegelfläche ausbilden, und am umlaufenden unteren Rand in einen Boden übergehen, entsprechend dem Oberbegriff des Anspruches 1 und der weiter unten abgehandelten EP 0 106 362.

Ein alter Wunsch, man kann schon sagen, Wunschtraum, der Designer ist es, die Seitenwände mit einer Prägung zu versehen, sei es ein Hinweis auf den Hersteller oder den Inhalt oder den Adressaten, ein Logo, ein Slogan, oder was auch immer. Dazu ist jedoch die Verwendung einer geteilten Form mit zusätzlicher Bewegung der einzelnen Teile notwendig, was einen Aufwand bedeutet, der von den Kaufleuten an der Seite der Designer nie akzeptiert worden ist. Es hat Versuche gegeben, durch nachgiebige Einsätze (Gummi, Kunststoff) in den äußeren Formteil (Matrize) und entsprechende Vorsprünge am inneren Formteil (Patrize) zu Prägungen an den Seitenwänden zu kommen, doch war weder die Qualität des Ergebnisses noch die Haltbarkeit der Einsätze ausreichend für einen Einsatz bei den in Frage kommenden Stückzahlen.

Aus dem Stand der Technik ist folgendes bekannt:
Aus der oben genannten EP 0 106 362 ist es bekannt, konische Behälter mit glatten Wänden tiefzuziehen, die auf ihrer Innenseite eine Schicht aus Dichtungsmaterial, nämlich aufextrudiertem Polypropylen, aufweisen.

Ein aus der DE 10 2005 036 269 A1 bekannter Behälter, der aus einer mehrschichtigen Folie gefaltet oder gerollt wird, weist durch Prägung gebildete Informationen, beispielsweise in Braille, auf. Diese Prägung erfolgt vor dem Falten bzw. Rollen und ist ein kostspieliger zusätzlicher Schritt, der noch dazu nur zu Behältern mit "Stoß" oder "Naht" führt, der bzw. die extra geschlossen werden muss.

Ein ähnlicher Behälter ist aus der WO 2016/008744 A1 bekannt, wobei das Herstellungsverfahren und die verwendbaren Folienaufbauten wesentlich detaillierter als bei der zuvor genannten Druckschrift beschrieben werden, die Nachteile bleiben die Gleichen.

Aus der DE 10 2007 018 778 A1 ist es bekannt, einen zylindrischen Deckel für Cremedosen tiefzuziehen und dabei auf der ebenen Deckfläche eine Prägung aufzubringen. Für die Ausbildung von Prägungen auf den Seitenwänden gibt dies natürlich nichts her.

Aus der DE 199 24 604 A1 ist es bekannt, bei der Herstellung dreidimensionaler Formkörper zur Vermeidung von Rissen beim Verformen einen dünnschichtigen Überzug vorzusehen, der Vertiefungen und Erhöhungen eingeprägt hat, die beim gemeinsamen Verformen abflachen und so der Rissbildung vorbeugen. Durch entsprechende Temperatur und hohen Druck findet eine Verbindung des Überzugs mit dem Körpermaterial statt. Es werden daher die Prägungen beim Umformen nicht geschaffen, sondern verwischt und undeutlich, das Zusatzmaterial und die exotischen thermischen und Druckbedingungen erlauben keine ökonomische Taktrate.

Es ist somit aus dem Stand der Technik nichts Zielführendes bekannt. Das Schutzbegehren geht von der erstgenannten Druckschrift, dem tiefgezogenen Behälter, aus und stellt daher trotz der DE 10 2005 036 269 A1 die Prägung der Seitenwände in den kennzeichnenden Teil des Anspruches 1.

Die Behälter der eingangs genannten Art werden nach dem Befüllen mittels einer Platine, verschiedentlich auch Deckel genannt, die am oberen, umlaufenden Rand des Behälters mit diesem dicht versiegelt wird, verschlossen. Dazu gibt es die unterschiedlichsten Möglichkeiten, im Zuge des Tiefziehens am oberen Rand eine passende Siegelfläche bereitzustellen, von einem einfachen flanschartigen Gebilde bis hin zum Rollrand in seinen verschiedenen Ausführungen. Die Siegelfläche verläuft dabei praktisch immer parallel zur Aufstandsfläche des Behälters, die wiederum parallel zum, eventuell "gemittelten", weil mit Rillen versehenen, Boden verläuft. Als obiter dictum soll noch darauf verwiesen werden, dass bei der Herstellung, ausgehend vom Endlosmaterial, das Ausstanzen zumeist nach dem Tiefziehen, aber noch an derselben Station erfolgt.

Die Behälter werden in genisteter Anordnung zum Befüller gebracht, aus diesem Grund sind die Seitenwände gegenüber der Normalen zur Siegelfläche geneigt, meist im Bereich zwischen 5° und 15°, wobei auch die Designwünsche des Befüllers eine Rolle spielen. Steilere Ausbildungen stoßen bald an die Grenzen der Nistbarkeit, flachere Ausbildungen sind aus kaufmännischen Gründen (Patzverschwendung) im Handel unerwünscht. Alle Kanten und Ecken sind im Stand der Technik sowohl aus herstellungstechnischen als auch aus haptischen Gründen abgerundet.

Aus Gründen der mechanischen Stabilität weisen in vielen Fällen derartige Behälter Sicken in den Seitenwänden auf, die entlang von Falllinien (wenn der Behälter auf einer horizontalen Fläche aufliegt) verlaufen. Diese Sicken reichen vom Bodenbereich, zumeist vom Ende der Ausrundung, mit der die Seitenwand in den Boden übergeht, bis zum Übergang zur Siegelfläche, stellen somit herstellungstechnisch unproblematische "Fältelungen" der seitlichen Wände dar, die weder beim Ziehvorgang noch beim Ausformen Probleme bereiten.

Es gibt auch Behälterformen, deren Seitenwände im Axialschnitt, bzw. Schnitt normal auf die Aufstandsfläche, nicht geradlinig verlaufen, sondern gebaucht ausgebildet sind, doch sind das bei Berücksichtigung der Häufigkeit Sonderfälle. Die Grundform der Behälter ist unterschiedlich, neben dem klassischen Kreis oder ovalen Formen (auch dann wird aus Gründen der sprachlichen Übersichtlichkeit in der Beschreibung und in den Ansprüchen gegebenenfalls von: "seitlichen Wänden" im Plural gesprochen) und Quadrat gibt es über Rechtecke, Fünfecke und angedeutete Knochenformen, natürlich stets mit entsprechender Abrundung der Ecken, zahlreiche exotische Formen, wie sie die verschiedenen Designer wünschen.

Die Behälter, von denen hier die Rede ist, weisen zumeist eine Höhe normal zur Siegelfläche auf, die kleiner oder kaum größer ist, als der mittlere Durchmesser der von der Siegelfläche aufgespannten Fläche; wenn es wegen der Form dieser Fläche notwendig ist, wird dieser durch die Quadratwurzel der Fläche bestimmt, und werden dann oft auch als Schale oder Tasse bezeichnet, andernfalls auch oft als Becher. Sie sind hauptsächlich, aber ohne darauf beschränkt zu sein, für Lebensmittel und für Tiernahrung gedacht, somit für Produkte, bei denen die Erscheinungsform eine große Rolle spielt. Trotz dieses Stellenwertes konnten die im Stand der Technik bekannten Herstellungsverfahren für geprägte Seitenwände nicht reüssieren.

Es besteht somit ein großer Bedarf an derart ausgestalteten Behältern bzw. Schalen, Tassen, Bechern oder wie auch immer genannt, und es ist Aufgabe der Erfindung, einen derartigen Behälter zu schaffen, die kostengünstig herzustellen ist und deren Seitenprägung den optischen Anforderungen genügt, das heißt, dass sie klare Konturen und eine von Riefen und Schlieren ungetrübte Fläche im geprägten Bereich aufweist.

Erfindungsgemäß wird diese Aufgabe durch die im kennzeichnenden Teil des Anspruches 1 enthaltenen Merkmale gelöst; mit anderen Worten, es weist die Seitenwand eine Prägung auf, und im Übergang von der "normalen" Seitenfläche zum geprägten Bereich, genauer: zur Prägung, sind Abrundungen mit einem Radius zwischen 0,1 und 0,3 mm vorgesehen. Die Höhe bzw. Tiefe der Prägung, je nach Betrachtungsweise, liegt bevorzugt zwischen der halben und der doppelten Wandstärke der Seitenwand beim fertig tiefgezogenen Behälter.

Bei Bechern und gegebenenfalls auch bei hohen Schalen kann die Qualität der Erscheinungsform der Prägung durch zweifachen Zug erhalten bzw. verbessert werden, bei niedrigen Schalen ist dies nicht notwendig.

Es ist interessant, dass dadurch Prägungen, darunter wird jedwede Schrift bzw. jedwedes Bild, das sich nicht im Bereich der Ebene des ungeprägten Wandbereichs befindet, verstanden, erhalten werden, die im Gegensatz zu den mit geteilten Werkzeugen hergestellten keine Nahtstellen bzw. Riefen bzw. Grate, aufweisen und sich daher sowohl vom Handling her als auch optisch vorteilhaft von den bekannten Prägungen abheben.

Es wird auch die Lebensdauer der Formteile beim Einhalten dieser Werte nicht beeinträchtigt, die Erfindung macht keine Änderung der Vorrichtungen, außer der Verwendung der Matrizen/Patrizen notwendig, auch die einzelnen Arbeitsschritte bleiben unverändert, bei hohen Behältern kann der zweifache Zug als Änderung notwendig sein. Beim Weitertransport stellt die Prägung keine Probleme beim Nisten oder Entnehmen dar, dazu sind die lokalen Änderungen der Geometrie - Abweichung von der ebenen (=ungeprägten, glatten) Fläche - zu gering.

Kleinere Radien am Rand der Prägung machen beim Entnehmen des geprägten Behälters Probleme, größere führen zu optisch unbefriedigenden und auch mechanisch nicht stabilen Resultaten. Es ist herstellungstechnisch nicht notwendig, dass die geprägten Bereiche Abstand zur Ausrundung am Übergang zum Boden bzw. der Siegelfläche aufweisen, doch wird aus mechanischen und optischen Gründen ein Abstand der jeweils zumindest dem Radius der entsprechenden Ausrundung entspricht, vorgesehen.

Bei Behältern, deren Seitenwände wie oben erläutert, im Axialschnitt (bzw. Schnitt normal zur Siegelfläche/Aufstandsfläche) nicht geradlinig verlaufen, ist ein Abstand der Prägung zum oberen Rand der jeweiligen Wand bis in einen Bereich, in dem diese die oben genannte Schräge zur Siegelfläche aufweist, aus herstellungstechnischen Gründen notwendig. Wenn bei derartigen Behältern/Schalen die seitliche Wand auch beim Übergang zur Siegelfläche eine derartige Neigung besitzt, ist es selbstverständlich nicht notwendig, einen Abstand einzuhalten.

Wie eingangs ausgeführt, ist das erfindungsgemäße Ziel bei allen Materialien, nämlich Folien, die zumeist als Endlosmaterial vorliegen, erreichbar, die aus zumindest einer Schicht Aluminium und zumindest einer Schicht Siegelmaterial bestehen, es können weitere Schichten vorgesehen sein, insbesondere auf der späteren Außenseite, und hier insbesondere Druckschichten mit allen Hilfsschichten wie: Primer, Druckvorlack, Druckschutzschicht, etc.. Mit passenden Markierungen für die Position am Endlosmaterial ist es möglich, die Prägung auf der Seitenwand auch durch ein entsprechendes Druckbild hervorzuheben.

Das Aluminium kann Weichaluminium oder Hartaluminium sein, diese Begriffe und die damit verbundenen Eigenschaften sind dem Fachmann bestens bekannt, die verwendeten Dicken sind die gleichen wie bei analogen Schalen ohne Prägung; gleiches gilt für das aus dem Stand der Technik bekannte Siegelmaterial, das keinen Einschränkungen unterliegt.

Wenn auch in der Beschreibung und den Ansprüchen von einer Prägung im Singular gesprochen wird, ist es doch so, dass mehrere Prägungen, auch auf einer der Seitenflächen, vorgesehen werden können. Es kann eine Prägung auch zwischen eventuell vorhandenen Sicken vorgesehen sein, diese Elemente beeinträchtigen einander nicht, solange sie unbeschadet nebeneinander angeordnet sind. Über den Begriff "eine" oder "mehrere" Seitenfläche(n) bei Behältern mit kreisförmiger oder ovaler Grundfläche wurde bereits oben näheres ausgeführt.

### Vorsorgliche Erläuterungen:

Es soll noch darauf hingewiesen werden, dass in der Beschreibung und den Ansprüchen Angaben wie "großteils" bei der Zusammensetzung von Materialien über 50 Gew.-%, bevorzugt über 80 Gew.-% und besonders bevorzugt über 95 Gew.-% bedeuten; dass "unterer Bereich" eines Reaktors, Filters, Bauwerks, oder einer Vorrichtung oder, ganz allgemein, eines Gegenstandes, die untere Hälfte und insbesondere das untere Viertel der Gesamthöhe bedeutet, "unterster Bereich" das unterste Viertel und insbesondere einen noch kleineren Teil; während "mittlerer Bereich" das mittlere Drittel der Gesamthöhe meint. All diese Angaben haben ihre landläufige Bedeutung, angewandt auf die bestimmungsgemäße Position des betrachteten Gegenstandes.

In der Beschreibung und den Ansprüchen werden die Begriffe "vorne", "hinten", "oben", "unten" und so weiter in der landläufigen Form und unter Bezugnahme auf den Gegenstand in seiner üblichen Gebrauchslage, gebraucht. Das heißt, dass die Mündung des Laufes einer Waffe "vorne" ist, dass der Verschluss bzw. Schlitten durch die Explosionsgase nach "hinten" bewegt wird, dass eine Aufstandsfläche eines Behälters "unten" ist, etc..

In der Beschreibung und den Ansprüchen bedeutet "im Wesentlichen" eine Abweichung von bis zu 10 % des angegebenen Wertes, wenn es physikalisch möglich ist, sowohl nach unten als auch nach oben, ansonsten nur in die sinnvolle Richtung, bei Gradangaben (Winkel und Temperatur) sind damit ± 10° gemeint.

Bei Bezeichnungen wie bei: "ein Lösungsmittel", "eine Prägung" ist das Wort "ein" nicht als Zahlwort, sondern als Fürwort bzw. als unbestimmter Artikel anzusehen, wenn nicht aus dem Zusammenhang etwas anderes hervorgeht.

Der Begriff: "Kombination" bzw. "Kombinationen" steht, soferne nichts anderes angegeben, für alle Arten von Kombinationen, ausgehend von zwei der betreffenden Bestandteile bis zu einer Vielzahl derartiger Bestandteile, der Begriff: "enthaltend" steht auch für "bestehend aus".

## Patentansprüche

1. Tiefgezogener Behälter aus zumindest einer Schicht Aluminium mit zumindest einer Schicht Siegelmaterial, das sich nach dem Tiefziehvorgang auf der Innenseite des Behälters befindet, mit einem Boden und mit seitlichen Wänden, die am umlaufenden oberen Rand in einer Siegelebene eine Siegelfläche ausbilden und am umlaufenden unteren Rand in einen Boden übergehen, wobei zumindest eine Seitenwand eine Neigung gegen die Normale auf die Siegelfläche aufweist, **dadurch gekennzeichnet, dass** zumindest eine Seitenwand eine Prägung aufweist, und im geprägten Bereich eine Neigung gegen die Normale auf die Siegelfläche von zumindest 10° aufweist, und dass am Übergang vom ungeprägten, normalen, Bereich der Seitenwand zur Prägung Abrundungen mit einem Radius zwischen 0,1 und 0,3 mm vorgesehen sind.

2. Tiefgezogener Behälter nach Anspruch 1, **dadurch gekennzeichnet, dass** die Höhe der Prägung über die ungeprägte, benachbarte Seitenwand zwischen dem 0,5-fachen und dem zum 2,0-fachen der Wandstäke dieser ungeprägten, benachbarten Seitenwand beträgt.

3. Tiefgezogener Behälter nach Anspruch 1 oder 2, **dadurch gekennzeichnet, dass** er an der Außenseite eine Druckschicht aufweist, und dass die Prägung mit dem Druckbild korreliert.

4. Verfahren zur Herstellung eines Behälters mit einem Boden und mit seitlichen Wänden, die am umlaufenden oberen Rand in eine Siegelfläche, die in einer Siegelebene liegt, und am umlaufenden unteren Rand in einen Boden übergehen, aus einer Folie aus zumindest einer Schicht Aluminium und zumindest einer Schicht Siegelmaterial, das sich nach dem Tiefziehvorgang auf der Innenseite des Behälters befindet, **dadurch gekennzeichnet, dass** zum Tiefziehen eine Form, bestehend aus Matrize und Patrize, verwendet wird, dass die beiden Teile im Bereich der seitlichen Wand, die eine Prägung erhalten soll, eine Neigung gegen die Normale auf die Siegelfläche von zumindest 10° aufweisen, dass die Matrize die Prägung in Form einer Vertiefung ihrer Wandfläche und die Patrize in Form einer korrespondierenden Erhöhung ihrer Wandfläche aufweist, und dass bei beiden Teilen die Übergänge vom ungeprägten Bereich der Seitenwand zum geprägten Bereich Abrundungen mit einem Radius zwischen 0,1 und 0,3 mm aufweisen.

5. Verfahren nach Anspruch 4, **dadurch gekennzeichnet, dass** bei Behältern, deren Höhe größer ist als die Quadratwurzel der von der Siegelfläche umspannten Fläche die Prägung mit zweifachem Zug erfolgt.

6. Verfahren nach Anspruch 4 oder 5, **dadurch gekennzeichnet, dass** die Folie auf ihrer späteren Außenseite mit einem Druckbild und das Endlosmaterial, aus dem sie gefertigt wird, außerhalb des Behälterbereiches mit Positionsmarkierungen versehen ist, und dass die Positionierung der Folie in der Form mit Hilfe der Markierungen so erfolgt, dass das Druckbild mit der Prägung geometrisch korreliert.

## Claims

1. Deep-drawn container made of at least one layer of aluminium having at least one layer of seal material, which is located on the inner side of the container after the deep-drawing process, having a base and having lateral walls which form a sealing surface on the peripheral upper edge in a sealing plane and which merge into a base on the peripheral lower edge, wherein at least one side wall has an inclination against the normal to the sealing surface, **characterised in that** at least one side wall has an imprint and, in the imprinted region, has an inclination against the normal to the sealing surface of at least 10°, and at the transition from the unimprinted, normal region of the side wall, roundings with a radius of between 0.1 and 0.3mm are provided for stamping.

2. Deep-drawn container according to claim 1, **characterised in that** the height of the imprint across the unimprinted, adjacent side wall is between 0.5 and 2.0 times the wall thickness of this unimprinted, adjacent side wall.

3. Deep-drawn container according to claim 1 or 2, **characterised in that** it has a print layer on the outer side, and the imprint correlates to the print image.

4. Method for manufacturing a container having a base and having lateral walls, which, on the peripheral upper edge merge into a sealing surface which lies in a sealing plane, and on the peripheral lower edge, merge into a base, from a film made of at least one layer of aluminium and at least one layer of seal material, which is located on the inner side of the container after the deep-drawing process, **characterised in that**, for deep drawing, a mould consisting of matrix and patrix is used, both parts have an inclination against the normal to the sealing surface of at least 10° in the region of the lateral wall which should receive an imprint, the matrix has the imprint in the form of a depression of its wall surface and the patrix in the form of a corresponding elevation of its wall surface, and in the case of both parts, the transitions from the unimprinted region of the side wall to the imprinted region have roundings with a radius of between 0.1 and 0.3mm.

5. Method according to claim 4, **characterised in that**, in the case of containers which have a height greater than the square root of the surface spanned by the sealing surface, the imprint occurs with double draw.

6. Method according to claim 4 or 5, **characterised in that** the film is provided on its subsequent outer side with a print image, and the continuous material, which it is manufactured from, is provided with position markings outside the container region, and the positioning of the film in the mould occurs with the help of the markings in such a way that the print image geometrically correlates to the imprint.

## Revendications

1. Récipient embouti constitué d'au moins une couche d'aluminium avec au moins une couche de matériau de scellement qui se trouve, après le processus d'emboutissage, sur le côté interne du récipient, avec un fond et avec des parois latérales, qui constituent, au niveau du bord périphérique supérieur, dans un plan de scellement, une surface de scellement et qui se transforment, au niveau du bord périphérique inférieur, en un fond, dans lequel au moins une paroi latérale présente une inclinaison par rapport à la normale sur la surface de scellement, **caractérisé en ce qu'**au moins une paroi latérale présente un estampage et, dans la zone estampée, présente une inclinaison par rapport à la normale sur la surface de scellement d'au moins 10° et **en ce que**, au niveau de la transition entre la zone non estampée normale de la paroi latérale et l'estampage, sont prévus des arrondis avec un rayon entre 0,1 et 0,3 mm.

2. Récipient embouti selon la revendication 1, **caractérisé en ce que** la hauteur de l'estampage au-dessus de la paroi latérale non estampée adjacente représente entre 0,5 fois et 2,0 fois l'épaisseur de paroi de cette paroi latérale non estampée adjacente.

3. Récipient embouti selon la revendication 1 ou 2, **caractérisé en ce qu'**il comprend, au niveau du côté externe, une couche imprimée et **en ce que** l'estampage est corrélé avec l'image imprimée.

4. Procédé de fabrication d'un récipient avec un fond et avec des parois latérales, qui se transforment, au niveau du bord périphérique supérieur, en une surface de scellement, qui se trouve dans un plan de scellement, et qui se transforment, au niveau du bord périphérique inférieure, en un fond, à partir d'un film constitué d'au moins une couche d'aluminium et d'au moins une couche de matériau de scellement, qui se trouve, après le processus d'emboutissage, sur le côté interne du récipient, **caractérisé en ce que**, pour l'emboutissage, une forme, constituée d'une matrice et d'un poinçon, est utilisée, **en ce que** les deux parties présentent, au niveau de la paroi latérale qui doit être soumise à un estampage, une inclinaison par rapport à la normale sur la surface de scellement d'au moins 10°, **en ce que** la matrice présente l'estampage sous la forme d'une cavité de sa surface de paroi et le poinçon présente l'estampage sous la forme d'un bossage correspondant de sa surface de paroi et **en ce que**, sur les deux parties, les transitions de la zone non estampée de la paroi latérale vers la zone estampée présentent des arrondis avec un rayon entre 0,1 et 0,3 mm.

5. Procédé selon la revendication 4, **caractérisé en ce que**, pour des récipients dont la hauteur est supérieure à la racine carrée de la surface couverte par la surface de scellement, l'estampage a lieu avec une double passe.

6. Procédé selon la revendication 4 ou 5, **caractérisé en ce que** le film est muni, sur ce qui sera plus tard son côté externe, d'une image imprimée et le matériau sans fin, à partir duquel il est réalisé est muni, à l'extérieur de la zone du récipient, de repères de position et **en ce que** le positionnement du film dans la forme a lieu à l'aide des repères de façon à ce que l'image imprimée soit corrélée géométriquement avec l'estampage.
